(19)

Europäisches Patentamt
European Patent Office
Office européen des brevets

(11) **EP 3 957 762 A1**

(12) **EUROPEAN PATENT APPLICATION**
published in accordance with Art. 153(4) EPC

(43) Date of publication:
**23.02.2022 Bulletin 2022/08**

(21) Application number: **19925353.5**

(22) Date of filing: **31.12.2019**

(51) International Patent Classification (IPC):
**C22C 38/58** [(2006.01)]     **C22C 38/52** [(2006.01)]
**C22C 38/50** [(2006.01)]

(52) Cooperative Patent Classification (CPC):
**C22C 38/001; C22C 38/002; C22C 38/005;
C22C 38/008; C22C 38/02; C22C 38/42;
C22C 38/44; C22C 38/50; C22C 38/52;
C22C 38/58; C22C 38/60**

(86) International application number:
**PCT/RU2019/001051**

(87) International publication number:
**WO 2020/214057 (22.10.2020 Gazette 2020/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.04.2019 RU 2019111240**

(71) Applicants:
• **Joint Stock Company "Rosenergoatom"
Moscow 109507 (RU)**
• **The Federal State Unitary Enterprise "Central
Research Inst. of Struct. Mat. "Prometey" named
by
I.V. Gorynin of Nat. Res. "Kurchatov Institute"
Sankt-Peterburg, 191015 (RU)**
• **Joint Stock Company "Experimental And Design
Organisation "Gidropress" Awarded the Order of
The
Red Baner of Labour and Czsr Order of Labour
Podolsk, 142103 (RU)**
• **Science and Innovations - Nuclear Industry
Scientific Development, Private Enterprise
Moscow, 119017 (RU)**

(72) Inventors:
• **MARGOLIN, Boris Zakharovich
Sankt- Peterburg, 193231 (RU)**
• **SOROKIN, Aleksandr Andreevich
Sankt- Peterburg, 196657 (RU)**
• **GULENKO, Aleksandr Georgievich
Sankt-Peterburg, 195298 (RU)**
• **TEPLUKHINA, Irina Vladimirovna
Sankt-Peterburg, 196295 (RU)**
• **ROMANOV, Oleg Nikolaevich
Sankt- Peterburg, 195252 (RU)**
• **PETROV, Sergei Nikolaevich
Leningradskaia obl., 188680 (RU)**
• **MIKHAILOV, Maksim Sergeevich
Sankt- Peterburg, 195257 (RU)**
• **VASIL'EVA, Evgeniya Andreevna
Sankt-Peterburg, 192148 (RU)**
• **PIMINOV, Vladimir Aleksandrovich
Moskovskaya obl., 142116 (RU)**

(74) Representative: **Friese Goeden Patentanwälte
PartGmbB
Widenmayerstraße 49
80538 München (DE)**

(54) **RADIATION-RESISTANT AUSTENITIC STEEL FOR AN INTERNAL BAFFLE FOR PRESSURIZED WATER REACTORS**

(57)     The invention refers to metallurgy of alloy steels and alloys, which are designed for use in nuclear power engineering industry during manufacture of NPP main equipment, viz. for manufacturing in-vessel baffle of pressurized water power reactors (VVER) with life less than 60 years.

The technical result of this invention is the creation of austenite chromium-nickel steel having increased resistance to swelling on impact of neutron flows at doses up to 150 dpa.

The technical result is attained by the fact that molybdenum, calcium and rare earth metals (REM) lanthanum and cerium have been included in addition in the composition of known steel containing carbon, silicon, manganese, chro-

EP 3 957 762 A1

**(Cont. next page)**

mium, nickel, titan and iron at the following ration of elements, mass %:

| | |
|---|---|
| carbon | $0.06 - 0.10$ |
| silicon | $0.40 - 0.60$ |
| manganese | $1.50 - 2.00$ |
| chromium | $15.0 - 16.0$ |
| nickel | $24.00 - 26.00$ |
| molibdenum | $0.70 - 1.40$ |
| titanium | $(5*\text{carbon content} + 0.10) - 0.80$ |
| calcium | $0.001 - 0.003$ |
| lanthanum and cerium | $0.001 - 0.005$ |
| phosphorus | $\leq 0.035$ |
| sulfur | $\leq 0.008$ |
| nitrogen | $\leq 0.020$ |
| cobalt | $\leq 0.025$ |
| copper | $\leq 0.3$ |
| tin | $\leq 0.001$ |
| antimony | $\leq 0.001$ |
| arsenic | $\leq 0.001$ |
| bismuth | $\leq 0.001$ |
| lead | $\leq 0.001$ |
| iron | others. |

Moreover, the following ratio must be met simultaneously for the most complete attainment of the technical result. Chromium equivalent calculated using the formula:

$$C_{Cr}^{equiv} = C_{Cr} + C_{Mo} + 1.5*C_{Si} + 0.5*C_{Ti},$$

shall not exceed the value

$$C_{Cr}^{ЭКВ} \leq 18.0;$$

where $C_{Cr}$ - chromium content, mass %; $C_{Mo}$ - molibdenum content, mass %; $C_{Si}$ - silicon content, mass %; $C_{Ti}$ - titanium content, mass %.

Nickel equivalent calculated using the formula:

$$C_{Ni}{}^{equiv} = C_{Ni} + 30*C_C + 0{,}5*C_{Mn} + 30*C_N,$$

shall not be below the value

$$C_{Ni}^{ЭКВ} \geq 27.5,$$

where $C_{Ni}$ - nickel content, mass %; $C_C$ - carbon content, mass %; $C_{Mn}$-manganese content, mass %; $C_N$ - nitrogen content, mass %.

The developed austenitic chromium-nickel steel with nickel content 25% allows achieve the specified technical result (increased resistance to swelling on retention of the required mechanical properties).

Fig. 1

**Description**

The invention refers to metallurgy of allied steels and alloys, which are designed for use in nuclear power engineering industry during manufacture of NPP main equipment meeting the safe operation requirements of nuclear power engineering, viz. for manufacturing in-vessel baffle of pressurized water power reactors (VVER) with life less than 60 years.

Corrosion-resistant steels of 08X18H10T and 08X18H9 type used for manufacturing in-vessel baffle in Russia [1-3] and abroad [4] respectively are known.

The VVER reactor in-vessel baffle is subject to high-dose neutron exposure and operated in the water medium of primary circuit coolant being a corrosive environment [5]. The high-dose exposure causes additional warming up of the baffle inner layers, consequently their irradiation-induced swelling. The baffle thickness temperature gradients and swellings lead to occurrence of high tensile stresses in the surface layers of the baffle contacting with water medium. The contact of highly-irradiated metal with the environment may lead to corrosion cracking of the baffle. Moreover, the irradiation-induced swelling of steel 08X18H10T exceeding 7% shall lead to $\gamma \rightarrow \alpha$- conversion and occurrence of brittle to ductile transition that is gives rise to ductility dip, i.e. embrittlement of steel.

The fracture resistance of steel becomes close to zero on swelling exceeding 5%.

The basic negative of radiation swelling is the deformation of baffle caused by it which may lead to contact of the inner surface with edge fuel assemblies (FA) and consequently to difficulty of removing FA from the core.

According to the evaluations presented in the works [6, 7] in the event of VVER TOI reactor baffle manufacture from the steel 08X18H10T currently used, the design life of the baffle 60 years may not be provided on conservative assessment of its radiation swelling. Moreover, the above specified embrittlement mechanisms shall be implemented, and the form alteration of the baffle shall lead to its contact with FA. The performed materials research [6] show that for guaranteed baffle performance assurance of the VVER TOI reactor during the design life of 60 years it is required to reduce the swelling of the baffle material by 2.4 times as compared to steel 08X18H10T.

The swelling of steel 08X18H9 under one and the same conditions is more than for the steel 08X18H10T [8], hence the baffle made of steel 08X18H9 shall have lesser life than the baffle made of steel 08X18H10T.

The closest by purpose operation conditions and mechanical characteristics for the suggested steel is steel of grade 08X18H10T-Y uner GOST 5632-72 [1] used currently for manufacturing in-vessel baffle and containing the components in mass %:

| | |
|---|---|
| carbon | ≤0.08 |
| silicon | ≤ 0.8 |
| manganese | ≤ 2.00 |
| chromium | 17.00 - 19.00 |
| nickel | 9.00-11.00 |
| titanium | 5*C - 0.70 |
| sulfur | ≤ 0.02 |
| phosphorus | ≤0.035 |
| cobalt | ≤0.025 |
| copper | ≤0.3 |
| iron | others. |

This grade is characterized by inadequate resistance to radiation swelling under the deformation and embrittlement criteria at damaging doses characteristic for in-vessel baffle of III+ generation VVER.

The task for resolution thereof the proposed invention is directed is the development of steel allowing increase the life of in-vessel parts (baffles) of VVER TOI up to 60 years.

The technical result of this invention is the development of austenitic chromium-nickel steel having increased resistance to swelling on neutron flux impact at doses up to 150 dpa (displacements per atom) that ensures reduction of deformation of the in-vessel baffle during operation, and higher ductility and fracture resistance characteristics in the neutron-irradiated state on retention of stress-corrosion fracture resistance (as compared to 08X18H10T steel).

Such complex of properties of the new steel maintains the operability of in-vessel baffle of VVER TOI for the duration of the design life constituting at least 60 years.

The technical result is attained by the fact that molybdenum, calcium and rare earth metals (REM) lanthanum and cerium have been included in addition in the composition of known steel containing carbon, silicon, manganese, chromium, nickel, titan and iron at the following ration of elements, mass %:

| carbon | 0.06 - 0.10 |
|---|---|
| silicon | 0.40 - 0.60 |
| manganese | 1.50 - 2.00 |
| chromium | 15.0 - 16.0 |
| nickel | 24.00 - 26.00 |
| molibdenum | 0.70 - 1.40 |
| titanium | (5*carbon content+0.10) - 0.80 |
| calcium | 0.001-0.003 |
| lanthanum and cerium | 0.001-0.005 |
| phosphorus | ≤0.035 |
| sulfur | ≤0.008 |
| nitrogen | ≤0.020 |
| cobalt | ≤0.025 |
| copper | ≤0.3 |
| tin | ≤0.001 |
| antimony | ≤0.001 |
| arsenic | ≤0.001 |
| bismuth | ≤0.001 |
| lead | ≤0.001 |
| iron | others. |

Moreover, the following ratio must be met simultaneously for the most complete attainment of the technical result.

Chromium equivalent calculated using the formula:

$$C_{Cr}^{equiv} = C_{Cr} + C_{Mo} + 1.5*C_{Si} + 0.5*C_{Ti},$$

shall not exceed the value

$$C_{Cr}^{ЭКВ} \leq 18.0;$$

where Ccr - chromium content, mass %; $C_{Mo}$ - molibdenum content, mass %; $C_{Si}$ - silicon content, mass %; $C_{Ti}$ - titanium content, mass %.

Nickel equivalent calculated using the formula:

$$C_{Ni}^{equiv} = C_{Ni} + 30*C_{C} + 0{,}5*C_{Mn} + 30*C_{N},$$

shall not be below the value

$$C_{Ni}^{ЭКВ} \geq 27.5,$$

where $C_{Ni}$ - nickel content, mass %; Cc - carbon content, mass %; $C_{Mn}$-manganese content, mass %; $C_{N}$ - nitrogen content, mass %.

The width of the selected alloy content ranges is conditioned by the metallurgical features of heavy cast ingots.

The claimed invention is illustrated by the following drawings.

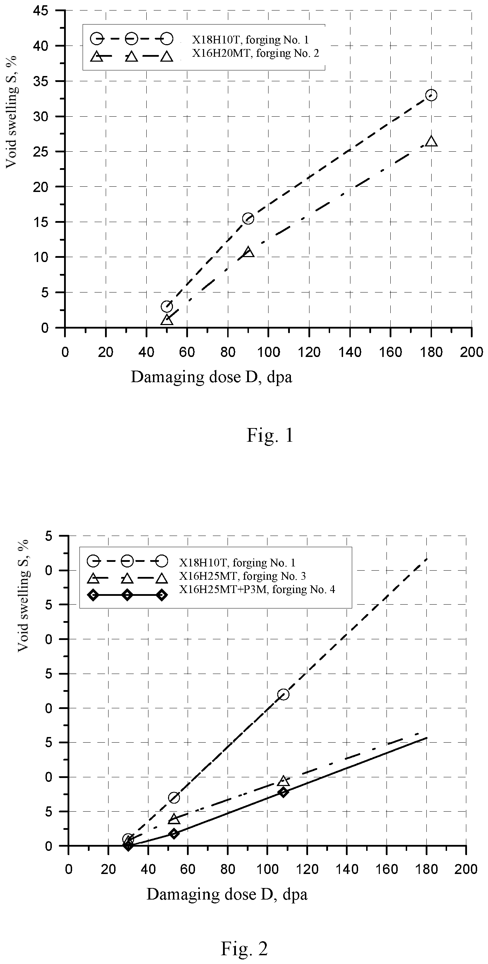

The dependencies of radiation swelling from damaging dose for the prototype (metal of forging No.1) and declared steel with 20% nickel (metal of forging No. 2) are presented in the fig. 1.

The dependencies of radiation swelling from damaging dose for the prototype (metal of forging No.1) and metal of forgings No. 3 and No. 4 are presented in the fig. 2.

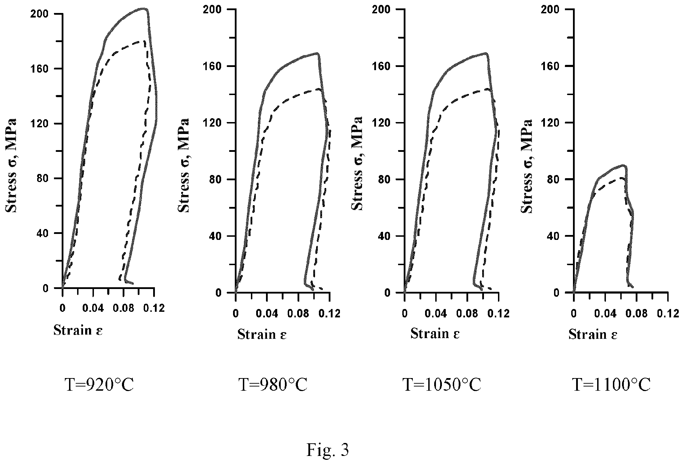

The comparison of the metal deformation diagrams of forging No. 3 (without REM and calcium) and forging No. 4 (with REM and calcium) at forging temperatures is shown in the fig. 3.

Table 1 contains data on the chemical composition of the materials of declared steel grade of forging No. 2 and forging No. 1 of the prototype.

Table 2 contains data on the chemical composition of materials of the declared steel grade of forgings No. 3 and No. 4.

The table 3 displays data on mechanical properties of the declared steel grade and prototype after austenitization at temperature 1050°C with cooling in water.

The fulfilment of these ratios ensures the retention of the austenitic structure for the duration of the entire operation life of the in-vessel baffle (no $\gamma \rightarrow \alpha$ transformation), maintenance of resistance to intergranular stress corrosion cracking and peak swelling value of baffle material of maximum 6% at the end of the reactor operation period.

The ratio of the specified elements including alloying elements and accepted restrictions of the total content of some of them have been selected so that steel provided the required level of mechanical characteristics and void swelling (no more than 6%) after irradiation by a dose of up to 150 dpa at maximum irradiation temperature $T_{irr}$ = 370°C.

The proposed steel as well as the prototype has been alloyed with carbon and titanium. The lower limit of carbon content (0.06%) has been stipulated in the proposed steel and the upper limit of carbon content has been increased up to 0.1%. The alloying with titanium is made with the calculation to ensure such guaranteed content of titanium carbides in the matrix that exerts influence on the radiation swelling towards its reduction. Elastically distorted areas are formed on the carbide-matrix interfaces, which serve as drains for the vacancies, due to their coherency and considerable positive solid non-conformance of the lattice parameters (+0.7 [9]). Moreover, the TiC carbides hold the helium bubbles and renders difficult their conversion to pores. As shown in the work [10], the input of ~0.1 % of titanium in X16H15M3 steel reduces swelling from 15 to 2% after the damaging dose 70 dpa ($T_{irr}$ = 500°C). Carbon content in the quantity C=(0.06-0.10)% in the proposed steel in the package with titanium alloying in the quantity ((5C+0.1)-0.8)% ensure prevention of $Cr_{23}C_6$ carbides formation along the boundaries of grains leading to chromium depletion of the near-border sections and increase of the tendency of steel to intercrystalline corrosion cracking. The titanium and carbon remaining in the solid solution makes a notable contribution in suppressing swelling both due to positive influence of radiation-induced caribides TiC and due to influence of individual atoms of titanium in the solid solution. The atomic radius of titanium is $R_{Ti}$ = 0.145 nm (above dimension element) that conditions the formation of the package titanium atom-iron vacancy (with cohesive energy 0.3 eV [11]) thereby forms additional recombination centers for interstitial atoms.

At titanium content exceeding 0.8-1.0%, an high concentration of dispersed particles of $N_{13}Ti$ ($\gamma'$-phase) is formed in the steel under irradiation. $\gamma'$-phase precipitation exerts double impact on the void swelling. Basically the finely dispersed $\gamma'$-phase quenches swelling under the mechanism similar to impact of TiC carbide [10]. On the other hand, $\gamma'$-phase removes an appreciable amount of nickel from the solid solution that may stimulate $\gamma \rightarrow \alpha$ transformation and growth of swelling.

The $\gamma \rightarrow \alpha$ phase change in the irradiation process of austenite steels takes place due to considerable degrading of the matrix by the austenite promoting elements, primarily by nickel. In addition the austenite matrix degrading is accompanied by intensification of swelling. A positive influence of increased nickel concentrations for suppressing swelling was noted both for the simple three-component alloys of Fe-Cr-Ni system and for the complex alloyed industrial compounds, besides the minimum swelling is noted on nickel content in the interval 35-45%. The quantitative assessment of the degree of depletion of the austenitic matrix by nickel showed that at size of swelling equal to 8% depletion of the matrix by nickel is about 6% [12].

The main element giving steel high corrosion resistance is chromium. The role of chromium consists in that it provides the capability of steel for passivation. A shielding passivating film is formed only at chromium content in steel greater than 12.5%. The chromium content in the declared grade is given in the range (15-16%) for the purposes of guaranteed provision of single-phase austenite microstructure of steel considering the depletion of matrix by nickel under irradiation.

The assessment of the degree of propensity of various steels for phase $\gamma \rightarrow \alpha$-transformation made using the Sheffler diagram showed that for the guaranteed absence of $\gamma \rightarrow \alpha$ conversion in austenitic steels containing (16-19)% of chromium equivalent $C_{Cr}^{equiv.}$ considering the depletion of steel matrix by nickel in the irradiation process for the duration of 60 years, the nickel content in steel must be increased as compared to the prototype from (9.00 - 11.00)% as a minimum up to 20%. Such an increase of nickel shall compensate the depletion of material matrix by nickel due to irradiation swelling, formation of radiation-induced phases and segregations and shall guaranteed provide a completely austenitic structure on swelling up to 8%. An increase in the nickel content as compared to the prototype also aids in reducing the void swelling during neutron exposure [12]. Nevertheless, 20% of nickel content may not be sufficient for the required reduction of void swelling as compared to the prototype. Considering certain results of studies [13] showing the absence of reduction of swelling on increase of nickel up to 20% at chromium content 16%, two variants of nickel content was considered on selection of the chemical composition: 20% and 25%.

Moreover, the increase of nickel up to 25% guarantees the absence of $\gamma \rightarrow \alpha$ transformation even at potential enrichment of the matrix by chromium equaivalent to depletion by nickel.

Molybdenum is an element reducing the diffusive mobility of various elements and increasing the creep resistance. Moreover, the allow addition of molybdenum enables the reduction of the degree of segregation processes of alloying and impurity elements in the matrix during operation, and increase of recrystallization temperature that is important for the formation of required grain point in the blank during forging. The reduction of diffusive mobility of the elements enables including the reduction of swelling and increase of creep resistance provides higher resistance to stress-corrosion cracking.

However the simultaneous alloying with titanium and molybdenum shall lead to the formation of large carbide in steel of (Ti, Mo)C type, which may lead to reduction of the fracture resistance and impact viscosity. According to the investigations made in the work [14] the formation of large carbides (Ti, Mo) C takes place even on reduct of the molybdenum content up to 1.5%. Hence Mo content in the new steel is established in the range 0.7 - 1.4%.

Silicon is used as one of the reducing agents in the declared steel grade. Silicon has diffusive mobility several orders above as compared to nickel and other main alloying elements of austenitic steel. The acceleration of diffusion in the steels, alloyed by silicon reduces the supersaturation by the vacancies ad thereby reduces the rate of pores nucleation. Another mechanism of silicon impact as the to dimension element is similar to nickel - silicon forms stable complexes with the interstitial atoms and thereby increases the degree of their recombination with vacancies. However in the process of y'- phase formation $Ni_3Si$ silicon removal takes place from the solid solution, besides jointly with nickel, most efficiently suppressing swelling and stabilizing $\gamma$-phase. The silicon content in 08X18H10T prototype is limited above by the level 0.8%. The content of silicon is limited by the level 0.4-0.6% in the declared grade considering both the positive and negative impact of silicon.

Manganese is used for removing oxygen and sulfur from steel. It has lesser tendency for segregation than any other alloying element. Manganese favorably impacts the quality of forging in the entire carbon content range excluding the steels with very low carbon content and also reduces the risk of hot-brittleness. Manganese favorably impacts the forging quality and weldability of steels. Manganese assists in the formation of austenite and hence extends the austenite area of the state diagram. A large content of manganese (more than 2%) shall lead to increase of the tendency to crack and warping distortion during hardening. The manganese content iin the declared steel is limited by the level 1.5-2.0%.

The nitrogen content in the declared steel is specified as impurity since nitrogen leads to formation of titanium nitrides and carbonitrides on which the deformation pores are formed [15]. Moreover, nitrogen reduces the stacking fault energy (SFE) that has an adverse effect on the steel resistance to stress-corrosion cracking. Based on the above, and considering the current potential of metallurgical production, the nitrogen content must not exceed 0.02%, i.e. $C_N \leq 0.02\%$.

The declared steel is alloyed with calcium in the quantity 0.001-0.003%, which in the process of solidification is adsorbed on the surface of growing crystals, reducing the rate of growth of the metal crystal faces and thus promotes the formation of a more disperse structure. Calcium binds sulfur in high-melting compounds, sharply reducing the possibility of formation of readily fusible sulfides TiS and NiS on ultra equilibrium content of sulfur.

Introduction of rare earth metal (REM) cerium and lanthanum admixtures to the metal in cumulative quantity 0.001-0.005% leads to grain refining; cleans steel of oxygen, sulfur and neutralizes the hazardous impact of admixtures of nonferrous metals; improves weldability of steel from the view point of resistance buildup to formation of hot-cracking following the binding of sulfur and oxygen in the high-melting compound [16]. The rare earth metals reduce resistance to deformation during forging increasing processability of steel during manufacture of large-sized forgings. Moreover, these metals reduce void swelling [9].

Phosphorus has high diffusive mobility and intensifies the rate of diffuson of the main elements of steel. The segregation of phosphide $Fe_2P$ intensifies the recombination of isolated radiation-induced defects on the interface of the segregation-matrix due to high non-conformance [9, 17]. Hence phosphorus should not be considered as an impurity in the declared steel grade. The optimum phosphorus content form the point of view of reducing swelling is from 0.020% to 0.035% [12, 17].

Nevertheless it should be noted that phosphorus may form grain boundary segregations and reduce corrosion resistance of steel [18].

Considering that in contemporary metallurgy charge material is used without introduction of special requirements for the purity of chromium-nickel steels by phosphorus content, at which the phosphorus content varies from 0.01% to 0.035%, the phosphorus content may be restricted by 0.035% as in the prototype.

Sulfur content in the declared grade is limited by 0.008% that in combination with the microalloying with calcium ensures practically a total absence of low-melting eutectics on solidification of the ingot and as a consequence provides its process stregth. Moreover, the low sulfur content ensures low volume fraction of sulfides, as a consequence, high level of crack resistance and impact hardness [19].

The copper content as impurity as in the prototype steel is limited by 0.3% according to GOST 5632-72 [1] for steels not alloyed with copper.

The elements tin, antimony, arsenic, bismuth and lead are classified as impurities and their content in the proposed steel shall not exceed 0.001%. The impurities content above the specified level has an adverse effect on the service characteristics of steel - impurities on impact of operating temperature and irradiation enhancing diffusion segregage on the grain boundaries and weakens their cohesive strength.

Cobalt forms long-lived isotopes, hence its content in steel also is limited by the minimum level, which may be provided in steel of the proposed composition on melting - not more than 0.025%.

At the first stage from the principle of economic alloying of steel with nickel following experimental studies the composition of the declared steel was selected with the content of alloying and impurity elements within the patent composition limit excluding nickel the content thereof was 20%, and without introduction of REM and calcium. Two pilot forgings of weight 500 kg each were manufactured viz. forging No 1 of prototype (08X18H10T steel grade) and forging No.2 of the declared steel.

The metal was melted in vacuum induction furnaces. The ingot casting was made in vacuum. The obtained metal was subject to hot-forming method on the commercial press-forging equipment.

The chemical composition of the materials is given in the table 1.

Irradiation by heavy ions in the ion accelerator was conducted for comparative assessment of the tendency for void swelling at large irradiation doses of the declared steel with 20% nickel and prototype. The irradiation was performed at different temperatures and different level of pre-injected helium, imitating its generation in the material following nuclear reactions on irradiation by neutrons.

The microstructural and void swelling examination of the irradiated layer of specimen was made using the scanning and transmission electron microscopy methods.

As seen from the figure 1, the forging metal of the declared steel with 20% nickel has swelling 1.3 times lower than for the prototype.

Thus the declared steel with nickel content 20% does not provide the required reduction of irradiation swelling by 2.4 times as compared to the prototype, consequently the specified material does not provide the guaranteed functional ability of the VVER TOI baffle for the duration of the design operating period of 60 years.

Based on the obtained result two pilot forgings No. 3 and No. 4 of the declared steel 500 kg each were manufactured in addition. The content of alloy and doping elements in the metal of forging No. 3 corresponded to the patent composition without input of REM and calcium, and in the forging No. 4 - completely corresponded to the patent composition.

The chemical composition of forgings No. 3 and No. 4 is given in the table 2.

The metal of forgings No. 3 and No. 4 were irradiated in the ion accelerator under the mode simulating irradiation of internal material in the VVER type reactors. The prototype (forging No. 1) metal was irradiated under the same mode.

It is apparent from the fig. 2 that the swelling of metal of forging No. 3 is 2.4 time lower than for the prototype, and the swelling of metal of forging No. 4 is 2.7 times lower than for the prototype.

The obtained data show distinct advantage of the declared steel with 25% nickel as compared to steel with 20% nickel (metal of forging No.2). Moreover, it is apparent that the input of rare earth metals and calcium subdue void swelling to a certain extent.

Apart from the specified positive impact of REM and calcium on quenching swelling, the positive impact of these elements on the processability of steel during forging was confirmed.

The comparison of the metal deformation diagrams of forging No. 3 (without REM and calcium) and forging No. 4 (with REM and calcium) at forging temperatures is shown in the fig. 3, and it is apparent that the resistance of steel with REM and calcium is lower.

The research of mechanical properties of metal of forging prototype No. 1 and forging No. 4 of the declared steel was performed on the samples made of metal heat-treated after forging: diffusion annealing (austenitization) at 1050°C with cooling in water. Holding at austenitization temperature was assigned based on the calculation of 2 min/mm of cross-section. The blanks were manufactured from heat-treated material, and then the specimen for static tension at temperatures +20°C and 350°C.

The results of determining the mechanical properties are given in the table 3. The requirements for the range of mechanical properties for 08X18H10T prototype steel according to OST 108.109.01-92 are given in the same table, which are used when calculating the static strength of reactor internals, in particular the baffles. The results of mechanical tests have been averaged for two specimen at a point.

It is apparent from the data given in the table 3 that the metal of both the forgings meets the requirements of OST 108.109.01-92 presented to mechanical properties of prototype steel, hence, meet the strength characteristics of the VVER TOI type reactor baffle.

On the assumption that the mechanical properties of the declared steel with 25% nickel with addition of REM and calcium meet the requirements of OST 108.109.01-92 presented to the mechanical properties of prototype steel (Table 3), and radiation swelling is 2.7 lower than for the prototype (fig. 2) it is proposed to use the specified steel for internals of prospective VVER.

Moreover, it should be noted that the alloying of steel with REM improves its processability (fig. 3).

Considering the variation of the main alloying elements impacting its structural condition within the patent structure, and considering the processes leading to matrix depletion by nickel and enrichment by chromium during irradiation, the following ratios must be met for providing austenitic structure during the entire operation period for the declared composition: chromium equivalent calculated according to the formula $C_{Cr}^{\text{экв}} = C_{Cr} + C_{Mo} + 1{,}5*C_{Si} + 0{,}5*C_{Ti}$ must not exceed the value

$$C_{Cr}^{\text{ЭКВ}} \leq 18{,}0;$$

nickel equivalent calculated according to the formula: $C_{Ni}^{\text{экв}} = C_{Ni} + 30*C_C + 0{,}5*C_{Mn} + 30*C_N$ must be at least

$$C_{Ni}^{\text{ЭКВ}} \geq 27.5.$$

The result of performed tests certify that the developed austenitic chromium-nickel steel with 25% nickel content allows achieve the technical result specified in the description (increased resistance to swelling on conservation of the required mechanical properties), and with respect to the prototype alloy its disadvantages have been confirmed.

Information source:

1. GOST 5632-2014 Rust-resisting, heat-resisting and heat-resistant alloy stainless steels and alloys, Moscow, 2015, 54 pages.

2. OST 108.109.01-92 Billets of non-rotational part made of rust-resisting austenite class steels. Technical specifications.

3. RF patent No. 2293787 of 20.02.2007, Gazette No. 5.

4. ASTM A-182 standard.

5. V.P. Pogodin, V.L. Bogoyavlenskiy, V.P. Sentyurev Intracrystalline corrosion and stress-corrosion cracking of stainless steels in aquatic environment - Moscow, Atomizdat, 1970, pages 422.

6. G.P. Karzov, B.Z. Margolin Essential radiation damage of internals materials and materials science issues of their long-duration operation. REA Journal, 2015, pages 8-15.

7. V.A. Piminov, V.V. Evdokimenko Strength and life assessment of the internals of operating and constructed VVER type reactors: realistic and conservative forecasts. REA Journal, 2015, page 16-19.

8. N.K. Vasina, B.Z. Margolin, A.G. Gulenko, I.P. Kursevich Void swelling of stainless steels: effects. Processing of experimental data and formulation of determining equations. Journal "Material science issues", 2006, No. 4(48) pages 69-89.

9. V.N. Voevodin, I.M. Nekludov Evolution of structural and phase state and radiation durability of structural materials. Kiev, Naukovaya dumka, 2006, pages 376.

10. V.M. Nalesnik, V.V. Sagaradze and others Research of the processes determining the forming of austenitic stainless steels of type 16-15 with various variants of alloying in irradiation conditions of BN-600. "Questions of atomic science and engineering". Series: Physics of irradiation damages and radiation material science, issue 2(56).

11. Johnston P.A., Lam N.Q. Solute segregation under irradiation// Journal of Nuclear Materials, 1973, 69-70, p. 424.

12. I.P. Kursevich, G.P. Karzov, B.Z. Margolin and others. Alloying principles of new radiation-resistant austenitic steel for the internals of VVER-1200 ensuring their safe operation for minimum 60 years. Journal "Material science issues", 2012, No. 3(71) pages 140-154.

13. Garner F.A., Black C.A., Edwards D.J., Factors which control the swelling of Fe-Cr-Ni ternary austenitic alloys // J. Nucl. Mater., 1997,V. 245, 124-130 pp.

14. B. Rouxel, C. Bisor, Y. De Carlan et al. Influence of austenitic stainless steel microstructure on the void swelling under ion irradiation // EPJ Nuclear Sci. Technol., 2016, V.2.

15. A.A. Sorokin, B.Z. Margolin, I.P. Kursevich, A.I. Minkin, V.S. Neustroev, S.V. Belozerov. Impact of neutron irradiation on the mechanical properties of materials of VVER type reactor internals. Materials science issues, 2011, No. 2 (66), pages 131-152.

16. Electric arc welding technology. Edited by V.P. Dementsevich, S.I. Dumov Moscow, Mashinostroeniye, 1959, pages 358.

17. Maziasz P. J. Overview of microstructural evolution in neutron-irradiated austenitic stainless steels // Journal of Nuclear Materials. - 1993. - V. 205. - P. 118-145.

18. Metallurgical science and heat treatment of steel Reference Edited by M.I. Bernshtein, A.G. Rakhshtadt Moscow, Metallurgy, 1983, volume II, pages 365.

19. R.V. Khertsberg Deformation and fracture mechanics of structural materials. Translated from English By A.M.

Bernshtein Edited by M.L. Bernshtein, S.P. Efimenko, Metallurgy 1989, pages 575, illustrations 21.

Radiation resistant austenite steel for in-vessel baffle of VVER

Table 1

Chemical composition of forging No. 2 of the declared steel grade and prototype

| Steel | Conditional No. of the forging | Content of elements in mass % | | | | | | | | | | |
|---|---|---|---|---|---|---|---|---|---|---|---|---|
| | | iron | carbon | silicon | manganese | sulfur | phosphorus | chromium | nickel | molibdenum | titanium | copper |
| Prototype | 1 | others | 0.071 | 0.52 | 1.71 | 0.002 | 0.028 | 17.5 | 10.2 | 0.01 | 0.53 | 0.018 |
| Declared | 2 | others | 0.065 | 0.48 | 1.65 | 0.004 | 0.026 | 15.3 | 20.2 | 0.92 | 0.63 | 0.040 |

Continuaton of table 1

| Steel | Conditional No. of forging | Content of elements in mass % | | | | | | | | | |
|---|---|---|---|---|---|---|---|---|---|---|---|
| | | cobalt | nitrogen | antimony | tin | arsenic | bismuth | lead | calcium | cerium | lanthanum |
| Prototype | 1 | 0.021 | 0.0059 | 0.00010 | 0.00066 | 0.0015 | 0.00005 | 0.00007 | 0.0002 | 0.00014 | 0.00010 |
| Declared | 2 | 0.027 | 0.0081 | 0.00027 | 0.00074 | 0.0015 | 0.00005 | 0.00013 | 0.0002 | 0.00010 | 0.00010 |

Table 2

Chemical composition of forgings No. 3 and No. 4 of the declared steel grade

| Steel | Conditional No. of the forging | Content of elements in mass % | | | | | | | | | | |
|---|---|---|---|---|---|---|---|---|---|---|---|---|
| | | iron | carbon | silicon | manganese | sulfur | phosphorus | chromium | nickel | molibdenum | titanium | copper |
| Declared | 3 | others | 0.081 | 0.51 | 1.66 | 0.003 | 0.032 | 15.47 | 24.33 | 0.9 | 0.7 | 0.032 |
| Declared | 4 | others | 0.084 | 0.47 | 1.70 | 0.0029 | 0.035 | 15.71 | 24.53 | 0.8 | 0.7 | 0.032 |

Continuation of table 2

| Steel | Conditional No. of forging | Content of elements in mass % | | | | | | | | | |
|---|---|---|---|---|---|---|---|---|---|---|---|
| | | cobalt | nitrogen | antimony | tin | arsenic | bismuth | lead | calcium | cerium | lanthanum |
| Declared | 3 | 0.02 | 0.0076 | 0.00015 | 0.00050 | 0.0005 | 0.00005 | 0.00010 | 0.0003 | 0.0005 | 0.00010 |
| Declared | 4 | 0.02 | 0.0078 | 0.00015 | 0.00054 | 0.0005 | 0.00005 | 0.00012 | 0.0015 | 0.0020 | 0.00053 |

Table 3

| Mechanical properties of the declared steel grade and prototype after austenization at temperature 1050°C with cooling in water. | | | | | | |
|---|---|---|---|---|---|---|
| Steel | Conditiona l No. of forging | $T_{exec.}$, °C | Mechanical properties | | | |
| | | | $\sigma_B$, MPa | $\sigma_{0.2}$, MPa | $\delta$, % | $\psi$, % |
| Declared | 4 | 20 | 580 | 320 | 40 | 66 |
| | | 350 | 475 | 210 | 34 | 66 |
| Prototype | 1 | 20 | 590 | 235 | 53 | 74 |
| | | 350 | 425 | 180 | 42 | 60 |
| Requirements of OST 108.109.01-92 | | 20 | **490** | **195** | **35** | **40** |
| | | 350 | **335** | **155** | **25** | **40** |

## Claims

1. Radiation-resistant austenite steel for in-vessel baffle of VVER containing carbon, silicon, manganese, chromium, nickel, titanium and iron differing in that it additionally contains molybdenum, calcium, lanthanum and cerium at the following ration of elements, mass%:

| | |
|---|---|
| carbon | 0.06 - 0.10 |
| silicon | 0.40 - 0.60 |
| manganese | 1.50 - 2.00 |
| chromium | 15.0 - 16.0 |
| nickel | 24.00 - 26.00 |
| molibdenum | 0.70 - 1.40 |
| titanium | (5*carbon content+0.10) - 0.80 |
| calcium | 0.001-0.003 |
| lanthanum and cerium | 0.001-0.005 |
| phosphorus | $\leq$0.035 |
| sulfur | $\leq$0.008 |
| nitrogen | $\leq$0.020 |
| cobalt | $\leq$0.025 |
| copper | $\leq$0.3 |
| tin | $\leq$0.001 |
| antimony | $\leq$0.001 |
| arsenic | $\leq$0.001 |
| bismuth | $\leq$0.001 |
| lead | $\leq$0.001 |
| iron | others. |

2. Radiation-resistant austenite steel for in-vessel baffle of VVER according to item 1, differing in that the following ratios are met simultaneously:
Chromium equivalent $C_{Cr}^{equiv}$, calculated using the formula:

$$C_{Cr}^{equiv} = C_{Cr} + C_{Mo} + 1.5*C_{Si} + 0.5*C_{Ti},$$

shall not exceed the value

$$C_{Cr}^{\text{ЭКВ}} \leq 18.0;$$

where Ccr - chromium content, mass %; $C_{Mo}$ - content of molibden, mass %; $C_{Si}$ - silicon content, mass %; $C_{Ti}$ - titanium content, mass %.
nickel equivalent calculated using the formula:

$$C_{Ni}{}^{\text{equiv}} = C_{Ni} + 30{*}C_C + 0{,}5{*}C_{Mn} + 30{*}C_N,$$

shall not be below the value

$$C_{Ni}^{\text{ЭКВ}} \geq 27.5,$$

where $C_{Ni}$ - nickel content, mass %; Cc - carbon content, mass %; $C_{Mn}$-manganese content, mass %; $C_N$ - nitrogen content, mass %.

Fig. 1

Fig. 2

T=920°C          T=980°C          T=1050°C          T=1100°C

Fig. 3

## INTERNATIONAL SEARCH REPORT

| | International application No. |
| --- | --- |
| | PCT/RU 2019/001051 |

**A. CLASSIFICATION OF SUBJECT MATTER**

C22C 38/58 (2006.01)   C22C 38/52 (2006.01)   C22C 38/50 (2006.01)

According to International Patent Classification (IPC) or to both national classification and IPC

**B. FIELDS SEARCHED**

Minimum documentation searched (classification system followed by classification symbols)

C22C38/00-C22C38/60

Documentation searched other than minimum documentation to the extent that such documents are included in the fields searched

Electronic data base consulted during the international search (name of data base and, where practicable, search terms used)

PatSearch (RUPTO internal), Espacenet, DWPI, PAJ, USPTO

**C. DOCUMENTS CONSIDERED TO BE RELEVANT**

| Category* | Citation of document, with indication, where appropriate, of the relevant passages | Relevant to claim No. |
| --- | --- | --- |
| A | RU 2233906 C1 (OAO «MASHINOSTROITELNYI ZAVOD») 10.08.2004, the claims | 1-2 |
| A | RU 2068022 C1 (VNII NEORGANICHESKIKH MATERIALOV im. Akad. A. A. BOCHVARA) 20.10.1996 | 1-2 |
| A | RU 2420600 C1 (OTKRYTOE AKTSIONERNOE OBSHCHESTVO «VYSOKOTEKHNOLOGICHESKII NAUCHNO-ISSLEDOVATELSKII INSTITUT NEORGANICHESKIKH MATERIALOV imeni akademika. A. A. BOCHVARA i dr.) 24.09.2009 | 1-2 |
| A | US 9347121 B2 (ATI PROPERTIES, INC) 24.05.2016 | 1-2 |

☐ Further documents are listed in the continuation of Box C.     ☐ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 30 June 2020 (30.06.2020) | 23 July 2020 (23.07.20202) |

| Name and mailing address of the ISA/ | Authorized officer |
| --- | --- |
| | |
| Facsimile No. | Telephone No. |

Form PCT/ISA/210 (second sheet) (July 1998)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2293787 A

**Non-patent literature cited in the description**

- **V.P. POGODIN ; V.L. BOGOYAVLENSKIY ; V.P. SENTYUREV.** *Intracrystalline corrosion and stress-corrosion cracking of stainless steels in aquatic environment,* 1970, 422
- **G.P. KARZOV ; B.Z. MARGOLIN.** Essential radiation damage of internals materials and materials science issues of their long-duration operation. *REA Journal,* 2015, 8-15
- **V.A. PIMINOV ; V.V. EVDOKIMENKO.** Strength and life assessment of the internals of operating and constructed VVER type reactors: realistic and conservative forecasts. *REA Journal,* 2015, 16-19
- **N.K. VASINA ; B.Z. MARGOLIN ; A.G. GULENKO ; I.P. KURSEVICH.** Void swelling of stainless steels: effects. Processing of experimental data and formulation of determining equations. *Journal "Material science issues,* 2006, vol. 48 (4), 69-89
- **V.N. VOEVODIN ; I.M. NEKLUDOV.** Evolution of structural and phase state and radiation durability of structural materials. *Naukovaya dumka,* 2006, 376
- **V.M. NALESNIK ; V.V. SAGARADZE.** Research of the processes determining the forming of austenitic stainless steels of type 16-15 with various variants of alloying in irradiation conditions of BN-600. "Questions of atomic science and engineering. *Series: Physics of irradiation damages and radiation material science,* vol. 2 (56
- **JOHNSTON P.A. ; LAM N.Q.** Solute segregation under irradiation. *Journal of Nuclear Materials,* 1973, vol. 69-70, 424
- **I.P. KURSEVICH ; G.P. KARZOV ; B.Z. MARGOLIN.** Alloying principles of new radiation-resistant austenitic steel for the internals of VVER-1200 ensuring their safe operation for minimum 60 years. *Journal "Material science issues,* 2012, vol. 71 (3), 140-154
- **GARNER F.A. ; BLACK C.A. ; EDWARDS D.J.** Factors which control the swelling of Fe-Cr-Ni ternary austenitic alloys. *J. Nucl. Mater.,* 1997, vol. 245, 124-130
- **B. ROUXEL ; C. BISOR ; Y. DE CARLAN et al.** Influence of austenitic stainless steel microstructure on the void swelling under ion irradiation. *EPJ Nuclear Sci. Technol.,* 2016, vol. 2
- **A.A. SOROKIN ; B.Z. MARGOLIN ; I.P. KURSEVICH ; A.I. MINKIN ; V.S. NEUSTROEV ; S.V. BELOZEROV.** Impact of neutron irradiation on the mechanical properties of materials of VVER type reactor internals. *Materials science issues,* 2011, vol. 66 (2), 131-152
- Electric arc welding technology. Mashinostroeniye, 1959, 358
- **MAZIASZ P. J.** Overview of microstructural evolution in neutron-irradiated austenitic stainless steels. *Journal of Nuclear Materials,* 1993, vol. 205, 118-145
- Metallurgical science and heat treatment of steel. Metallurgy. 1983, vol. II, 365
- Deformation and fracture mechanics of structural materials. **R.V. KHERTSBERG.** Metallurgy. 1989, 575